# EUROPEAN PATENT APPLICATION

(11) **EP 3 352 035 A1**
(43) Date of publication of application: **25.07.2018**
(21) Application number: 17001990.5
(22) Date of filing: 06.12.2017
(51) Int. Cl.: G05D 1/00, G05D 1/02, G08C 17/00

(54) **WORK VEHICLE AND OTHER-VEHICLE MONITORING SYSTEM**

(30) Priority: 20.01.2017 JP 2017008359
(71) Applicant: Kubota Corporation, Osaka 556-8601 (JP)
(72) Inventor: Shinkai, Atsushi, Sakai-city, Osaka 590-0823 (JP); Sakaguchi, Kazuo, Hyogo 661-8567 (JP); Shimamoto, Izuru, Hyogo 661-8567 (JP); Tamatani, Kenji, Hyogo 661-8567 (JP); Suzukawa, Megumi, Hyogo 661-8567 (JP)
(74) Representative: Müller-Boré & Partner Patentanwälte PartG mbB

(57) **Abstract**

A master machine (VA) may include a display device (13) capable of displaying information, a master-machine-side communication unit (14A) capable of communicating with a slave machine (VB) capable of performing cooperative work, an acquisition unit (15) to acquire, from the slave machine (VB) through the master-machine-side communication unit (14A), a traveling work parameter (P) manually set in each item by a plurality of setting operation tools (11) provided in a slave-machine-side operation panel (12B) included in the slave machine VB, and a display control unit (16) to cause the display device (13) to display an other-vehicle setting checking screen virtually showing a state of the slave-machine-side operation panel (12B) including a setting state by each of the setting operation tools (11) of the slave machine (VB) based on the traveling work parameter (P) acquired by the acquisition unit (15).

## Description

### [Technical Field]

The present invention relates to a work vehicle and an other-vehicle monitoring system that can monitor a state of another work vehicle.

### [Background Art]

For example, a conventional work vehicle is described in JP 2001-507843 A (corresponding to WO 99/18482). The work vehicle described in JP 2001-507843 A includes a communication unit (in JP 2001-507843 A, referred to as a "wireless remote control device") that can communicate with another work vehicle (in JP 2001-507843 A, referred to as a "slave vehicle") that can perform cooperative work.

### [Summary of Invention]

### [Technical Problems]

A setting state of another work vehicle (e.g. slave vehicle) that can perform the cooperative work is often changeable by manually operating a setting operation tool provided in this work vehicle. In the conventional technology, because there is no means for checking the setting state of another work vehicle (e.g. slave vehicle) on the side of the work vehicle (e.g. master vehicle), in order to check the setting state of the other work vehicle, it may be necessary that an operator gets on this work vehicle (e.g. slave vehicle) and directly check the setting state of this work vehicle using the setting operation tool. This may result in inconvenience for the operator. Further, in some circumstances, an operator of a work vehicle, e.g. a master vehicle, having to check the setting state of another work vehicle, e.g., a slave vehicle, by getting on to the other work vehicle may cause delay in the work to be performed by the master vehicle and the slave vehicle.

In view of the circumstances mentioned above, there may be a demand for providing a work vehicle and an other-vehicle monitoring system for being capable of easily checking the setting state of another work vehicle that can perform the cooperative work.

### [Solutions to Problem]

According to an aspect, a work vehicle is provided. The work vehicle includes: a display device capable of displaying information; a communication unit capable of communicating with another work vehicle capable of performing cooperative work; an acquisition unit to acquire, from the other work vehicle through the communication unit, a traveling work parameter manually set in each item by a plurality of setting operation tools provided on an operation panel included in the other work vehicle; and a display control unit to cause the display device to display other-vehicle setting checking screen based on the traveling work parameter acquired by the acquisition unit, the other-vehicle setting checking screen virtually showing a state of the operation panel including a setting state by each of the setting operation tools of the other work vehicle.

According to the work vehicle of the above-stated aspect, the acquisition unit can acquire, through the communication unit, the traveling work parameter manually set in the other work vehicle. Further, the state of the operation panel including the setting state by each of the setting operation tools of the other work vehicle can be reconstructed as an image and a moving image based on the acquired traveling work parameter of the other work vehicle, and virtually shown in the other-vehicle setting checking screen of the display device in a visually easily understandable state. Because the image and the moving image can be reconstructed on the other-vehicle setting checking screen of the display device based on the traveling work parameter of the other work vehicle, the display can be performed in a visually easily understandable mode compared with the case that, for example, the operation panel of the other work vehicle is photographed and the photographed image and the moving image are entirely displayed in the display device.

Therefore, according to the work vehicle of the above-stated aspect, the setting state of the other work vehicle that can perform the cooperative work can easily be checked.

Preferably, a picture imitating an actual shape of each of the setting operation tools is shown in the other-vehicle setting checking screen.

With this configuration, the picture imitating the actual shape of each setting operation tool disposed in the operation panel of the other work vehicle can be shown in the other-vehicle setting checking screen of the display device, so that the operator can easily recognize the setting state of the other work vehicle.

Preferably, in the present disclosure, the setting state by each setting operation tool is shown in the other-vehicle setting checking screen while an actual arrangement mode of the plurality of setting operation tools is maintained.

With this configuration, the image and the moving image, which are reconstructed based on the traveling work parameter, can be shown in the other-vehicle setting checking screen of the display device while the actual arrangement mode of the setting operation tools in the other work vehicle is maintained, so that the operator can easily recognize the setting state of the other work vehicle.

Preferably, in the present disclosure, only a portion corresponding to some of the plurality of items that can be set on the operation panel is shown in the other-vehicle setting checking screen.

With this configuration, in the other-vehicle setting checking screen of the display device, for example, only a necessary portion such as the portion corresponding to the items associated with the plurality of setting operation tools capable of manually setting the traveling work parameter can be shown instead of showing all of the plurality of items that can be set on the operation panel. Therefore, the operator can check the setting state of the other work vehicle while unnecessary information is removed.

According to another aspect, an other-vehicle monitoring system is provided. The other-vehicle monitoring system includes: a first work vehicle; a second work vehicle capable of performing cooperative work with the first work vehicle; a communication system to communicably connect the first work vehicle and the second work vehicle; a display device provided in the first work vehicle to be capable of displaying information; and an operation panel provided in the second work vehicle, and including a plurality of setting operation tools capable of manually setting a traveling work parameter in each item. In various embodiments and examples described herein, the term, "setting operation tools capable of manually setting a traveling work parameter in each item", may be understood as setting operation tools configured to enable manual setting of a traveling work parameter in each item. In other words, each setting operation tool may be a tool used for manually setting a traveling work parameter. The first work vehicle may be configured to acquire the traveling work parameter from the second work vehicle through the communication system, and cause the display device to display an other-vehicle setting checking screen based on the acquired traveling work parameter, the other-vehicle setting checking screen virtually showing a state of the operation panel including a setting state by each of the setting operation tools of the second work vehicle.

According to the other-vehicle monitoring system of the above-stated aspect, the first work vehicle can acquire, through the communication system, the traveling work parameter manually set in the second work vehicle. Further, the state of the operation panel including the setting state by each of the setting operation tools of the second work vehicle can be reconstructed as an image and a moving image based on the acquired traveling work parameter of the second work vehicle, and virtually shown in the other-vehicle setting checking screen of the display device of the first work vehicle in the visually easily understandable state. Because the image and the moving image can be reconstructed on the other-vehicle setting checking screen of the display device of the first work vehicle based on the traveling work parameter of the second work vehicle, the display can be performed in a mode that is easy to recognize by the operator in addition to a simple structure compared with the case that, for example, the operation panel of the second work vehicle is photographed using a camera and the image and the moving image photographed using the camera are directly displayed in the display device of the first work vehicle.

Therefore, according to the present disclosure, the setting state of the other work vehicle that can perform the cooperative work can easily be checked.

Further, according to yet another aspect, a terminal device is provided. The terminal device is provided in a work vehicle and comprises:
a display device capable of displaying information;
a communication unit capable of communicating with another work vehicle capable of performing cooperative work;
an acquisition unit to acquire, from the other work vehicle through the communication unit, a traveling work parameter manually set in each item by a plurality of setting operation tools provided on an operation panel included in the other work vehicle; and
a display control unit to cause the display device to display an other-vehicle setting checking screen based on the traveling work parameter acquired by the acquisition unit, the other-vehicle setting checking screen virtually showing a state of the operation panel including a setting state by each of the setting operation tools of the other work vehicle.

Further, according to yet another aspect, a method is provided for monitoring a second work vehicle capable of performing cooperative work with a first work vehicle. The method comprises:
acquiring, by an acquisition unit through a communication unit that is comprised in the first work vehicle and that is configured to communicate with the second work vehicle, a traveling work parameter manually set in each item by a plurality of setting operation tools provided on an operation panel included in the second work vehicle;
causing, by a display control unit, a display device comprised in the first work vehicle to display an other-vehicle setting checking screen based on the traveling work parameter acquired by the acquisition unit, the other-vehicle setting checking screen virtually showing a state of the operation panel including a setting state by each of the setting operation tools of the second work vehicle.

In some circumstances, according to any one of the various embodiments and examples described herein, an operator of the work vehicle, e.g. a master vehicle, is not necessarily required to get on to another work vehicle, e.g. a slave vehicle, for checking the setting state of the other work vehicle. This may lead to avoiding delay in the work to be performed by the master vehicle and the slave vehicle, thereby improving efficiency of the work to be performed.

Further, in some circumstances, according to any one of the various embodiments and examples described herein, an operator of the work vehicle, e.g. a master vehicle, may change the setting state of the master vehicle and/or may control the master vehicle and/or another vehicle, e.g. a slave vehicle, in accordance with the setting state of the slave vehicle provided for display in the master vehicle for improving efficiency of the work to be performed in the field by the master vehicle and the slave vehicle. In other words, displaying the setting state of another work vehicle (e.g. slave vehicle) on a display device provided in a work vehicle (e.g. master vehicle) may provide an improved, continued man-machine interaction for performing work in a field by the work vehicles (e.g., master and slave vehicles).

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of Drawings]

Details of one or more implementations are set forth in the exemplary drawings and description below. Other features will be apparent from the description, the drawings, and from the claims. It should be understood, however, that even though embodiments are separately described, single features of different embodiments may be combined to further embodiments.
Fig. 1 is a side view illustrating an example of a configuration of a tractor.
Fig. 2 is a schematic diagram illustrating an example of cooperative work of tractors.
Fig. 3 is a block diagram illustrating an exemplary outline of an other-vehicle monitoring system.
Fig. 4 is a view illustrating an exemplary slave-machine-side operation panel in a slave machine.
Fig. 5 is a view illustrating an exemplary other-vehicle setting checking screen in a display device of a master machine.

### [Description of Embodiment]

### EXAMPLE OF CONFIGURATION OF WORK VEHICLE

An exemplary embodiment and various examples will be described below with reference to the drawings. It should be understood that various modifications to the exemplary embodiment and the examples may be made. In particular, elements of one example may be combined and used in other examples to form new examples.

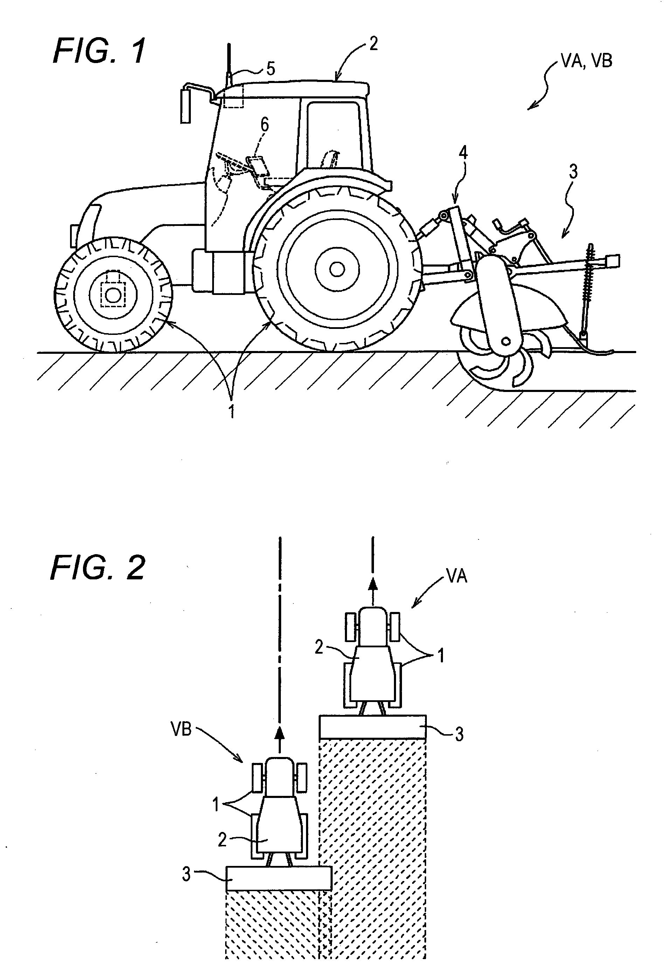

As illustrated in Fig. 1, a tractor (an example of a "work vehicle") may include a four-wheeled traveling device 1 that can cause a machine body to travel, a driving section 2 that an operator can get on to perform driving operation, a work device 3 that can perform ground work on a field, a lifting connecting mechanism 4 that can couple the work device 3 to the machine body so as to be able to lift the work device 3 relative to the machine of the machine body and so as to be able to swing about a longitudinal axis, a mobile station 5 that can receive GNSS positional information, and/or a work terminal 6 that can perform various operation inputs and presentations of information.

As illustrated in Fig. 1, the driving section 2 may include the work terminal 6. The work terminal 6 may be a terminal device implemented by a general purpose computer including one or more processors and one or more storage devices, such as a memory, coupled to the one or more processors. In this example, the work terminal 6 may be an on-vehicle type fixed to the driving section 2 of the tractor.

### COOPERATIVE CONTROL

As illustrated in Fig. 2, a master machine VA (an example of the "work vehicle" and a "first work vehicle", which may also be considered as a master vehicle) that may be the tractor having the above configuration and a slave machine VB (an example of "another work vehicle" and a "second work vehicle", which may also be considered as a slave vehicle) that may be the tractor having the above configuration may be configured to be able to run side by side and perform cooperative work in the field while communicating with each other. In the example of Fig. 2, the master machine VA starts first while the slave machine VB runs behind the master machine VA. Alternatively, the slave machine VB may start first while the master machine VA runs side by side behind the slave machine VB.

The master machine VA may be a manned vehicle that travels while the operator gets on board. For example, the slave machine VB may be an unmanned vehicle that a person does not get on board during the cooperative work, or a manned vehicle that a person gets on board during the cooperative work. The master machine VA and the slave machine VB can independently be used as a normal tractor when not performing the cooperative work.

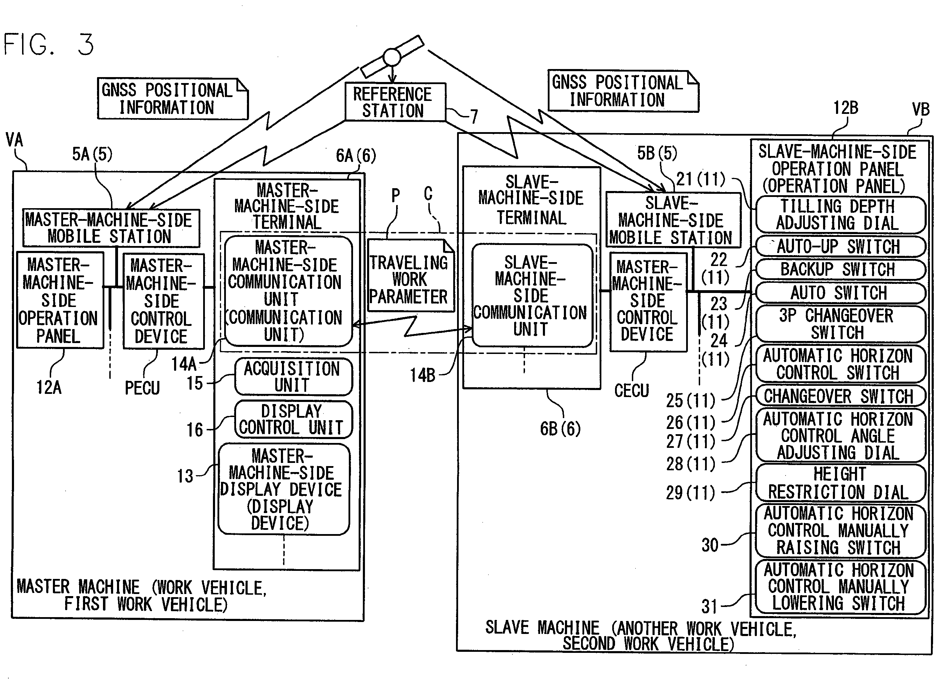

As illustrated in Fig. 3, a master-machine-side mobile station 5A of the master machine VA may receive the GNSS positional information from both a GNSS satellite 8 and a fixed reference station 7 that acquires the GNSS positional information from the GNSS satellite 8, and the master machine VA may accurately obtain an own position based on the GNSS positional information, and may automatically travel along a travel route of the master machine VA under the control of a master-machine-side terminal 6A that may be the work terminal 6. A slave-machine-side mobile station 5B of the slave machine VB may receive the GNSS positional information from both the GNSS satellite 8 and the reference station 7 that acquires the GNSS positional information from the GNSS satellite 8, and the slave machine VB may accurately obtain the own position based on the GNSS positional information, and may automatically travel along the travel route of the slave machine VB under the control of the master-machine-side terminal 6A which may be the work terminal 6.

### OTHER-VEHICLE MONITORING SYSTEM

Fig. 3 illustrates an example of a main-part configuration of an other-vehicle monitoring system. Only the main-part configuration is illustrated in Fig. 3. However, in the exemplary embodiment, the master machine VA and the slave machine VB have the same specifications. The other-vehicle monitoring system may be provided with the master machine VA, the slave machine VB that can perform the cooperative work with the master machine VA, a communication system C that communicably connects the master machine VA and the slave machine VB.

As illustrated in Fig. 3, the master machine VA may acquire a traveling work parameter P from the slave machine VB through the communication system C, and display an other-vehicle setting checking screen S on a display device 13 provided in the master machine VA. The other-vehicle setting checking screen S may virtually show a state of a slave-machine-side operation panel 12B (which may correspond to the "operation panel") including a setting state by each setting operation tool 11 of the slave machine VB based on the acquired traveling work parameter P.

The master machine VA may include the display device 13 that can display information, a master-machine-side communication unit 14A (which may correspond to the "communication unit") that can communicate with the slave machine VB capable of performing the cooperative work, an acquisition unit 15 that may acquire, from the slave machine VB through the master-machine-side communication unit 14A, the traveling work parameter P manually set in each item by a plurality of setting operation tools 11 provided in the slave-machine-side operation panel 12B included in the slave machine VB, and a display control unit 16 that may cause the display device 13 to display the other-vehicle setting checking screen S virtually showing the state of the slave-machine-side operation panel 12B including the setting state by each of the setting operation tools 11 of the slave machine VB based on the traveling work parameter P acquired by the acquisition unit 15.

The slave machine VB may include the slave-machine-side operation panel 12B provided with the plurality of setting operation tools 11 that can enable manually setting the traveling work parameter P in each item. The slave machine VB may include a slave-machine-side terminal 6B that may be the work terminal 6 including a slave-machine-side communication unit 14B.

### OPERATION PANEL AND SETTING OPERATION TOOL

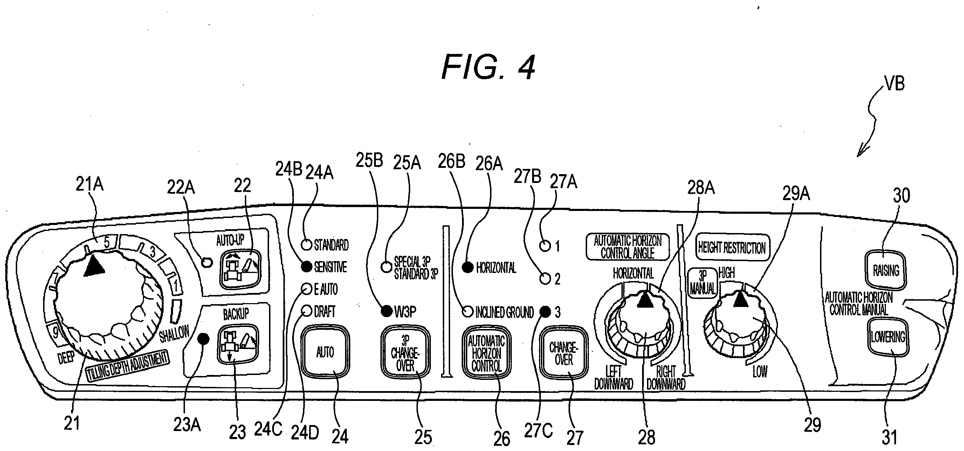

As illustrated in Fig. 4, the slave-machine-side operation panel 12B may include a tilling depth adjusting dial 21, an auto-up switch 22, a backup switch 23, an auto switch 24, a 3P changeover switch 25, an automatic horizon control switch 26, a changeover switch 27, an automatic horizon control angle adjusting dial 28, and/or a height restriction dial 29 as the setting operation tool(s) 11 that can adjust the setting state of each item of the traveling work parameter P of the slave machine VB by manual operation. The slave-machine-side operation panel 12B may also include an automatic horizon control manually raising switch 30 and/or an automatic horizon control manually lowering switch 31. Operation signals of each setting operation tool 11, the automatic horizon control manually raising switch 30, and/or the automatic horizon control manually lowering switch 31 may be input to a slave-machine-side control device CECU.

Exemplary operation tools that may be disposed on the slave-machine-side operation panel 12B will be described below.

The tilling depth adjusting dial 21 may be configured as a dial operation type. When the auto switch 24 is in a "standard" state, a "sensitive" state, and an "E auto" state, the tilling depth adjusting dial 21 may be manually adjusted to a dial operation position of the tilling depth adjusting dial 21, thereby adjusting a tilling depth of the work device 3. The tilling depth adjusting dial 21 can be variably adjusted to the dial operation position between a "deep position" and a "shallow position". As the dial operation position of the tilling depth adjusting dial 21 is brought closer to the "deep position", the tilling depth of the tilling performed by the work device 3 may be set deeper. On the other hand, as the dial operation position of the tilling depth adjusting dial 21 is brought closer to the "shallow position", the tilling depth of the tilling performed by the work device 3 may be set shallower. A tilling depth position indicator 21A indicating the dial operation position of the tilling depth adjusting dial 21 may be provided in the vicinity of the tilling depth adjusting dial 21.

The auto-up switch 22 may be configured as a pressing operation type. When the auto-up switch 22 is set to an "on state" by the operation, the work device 3 may be automatically raised with respect to the machine during turning of the machine body. An auto-up lamp 22A positioned in the vicinity of the auto-up switch 22 may be lit in the "on state" of the auto-up switch 22. On the other hand, in some exemplary cases, when the auto-up switch 22 is set to an "off state" by the operation, the work device 3 is not automatically raised with respect to the machine during the turning of the machine body. The auto-up lamp 22A may be turned off in the "off state" of the auto-up switch 22.

The backup switch 23 may be configured as a pressing operation type. When the backup switch 23 is set to the "on state" by operation, the work device 3 may be automatically raised with respect to the machine during backward traveling of the machine body. A backup lamp 23A located in the vicinity of the backup switch 23 may be lit in the "on state" of the backup switch 23. On the other hand, in some exemplary cases, when the backup switch 23 is set to the "off state" by the operation, the work device 3 is not automatically raised with respect to the machine during the backward traveling of the machine body. The backup switch 23 may be turned off in the "off state" of the backup switch 23.

The auto switch 24 may be configured as a pressing operation type.

When being set to the "standard" state by operation, the auto switch 24 may be suitable for performing general work from shallow plowing to deep plowing by the work device 3. A standard lamp 24A located in the vicinity of the auto switch 24 may be lit when the auto switch 24 is set to the "standard" state.

On the other hand, when being set to the "sensitive" state by operation, the auto switch 24 may be suitable for the case that the work device 3 improves finish of work such as pudding work in a wet field. A sensitive lamp 24B located in the vicinity of the auto switch 24 may be lit when the auto switch 24 is set to the "sensitive" state.

When the auto switch 24 is set to the "E auto" state by operation, the work device 3 may suitably perform automatic operation, in which the work device 3 may perform work such as rough plowing while raising a rotary cover with no use of the rear wheel. An E auto lamp 24C located in the vicinity of the auto switch 24 may be lit when the auto switch 24 is set to the "E auto" state.

When the auto switch 24 is set to a "draft" state by operation, the work device 3 may suitably perform draft work. A draft lamp 24D located in the vicinity of the auto switch 24 may be lit when the auto switch 24 is set to the "draft" state.

Automatic control may be canceled when the auto switch 24 is set to the "off state" by operation. The standard lamp 24A, the sensitive lamp 24B, the E auto lamp 24C, and/or the draft lamp 24D, which are related to the auto switch 24 may be turned off when the auto switch 24 is set to the "off state".

The 3P changeover switch 25 may be configured as a pressing operation type. The 3P changeover switch 25 may be a switch that selects specifications of the work device 3 attached to the machine. When the 3P changeover switch 25 is set to a "special 3P and standard 3P" state by operation, the setting may be suitable for the work device 3 provided with a special 3P auto hitch frame and the work device 3 for standard 3P. A special 3P and standard 3P lamp 25A located in the vicinity of the 3P changeover switch 25 may be lit when the 3P changeover switch 25 is set to the "special 3P and standard 3P" state. On the other hand, when the 3P changeover switch 25 is set to a "W3P" state by operation, the setting may be suitable for the work device 3 provided with a W3P auto hitch frame. The W3P lamp 25B may be lit when the 3P changeover switch 25 is set to the "W3P" state. Every time the 3P changeover switch 25 is pressed, the "special 3P and standard 3P" state and the "W3P" state may be switched in order.

When the automatic horizon control switch 26 is set to the "off state", and/or when the auto switch 24 is set to the "off state", the operation of the 3P changeover switch 25 may become invalid.

The automatic horizon control switch 26 may be configured as a pressing operation type. The automatic horizon control switch 26 may be operated in order to maintain the work device 3 in a horizontal orientation or in an orientation at a fixed angle with respect to a ground irrespective of the orientation of the machine.

When the automatic horizon control switch 26 is set to a "horizontal" state by operation, the orientation of the work device 3 may be horizontally maintained even if the orientation of the machine changes due to an irregular shape of the field. A horizontal lamp 26A located in the vicinity of the automatic horizon control switch 26 may be lit when the automatic horizon control switch 26 is set in the "horizontal" state.

On the other hand, when the automatic horizon control switch 26 is set to an "inclined ground" state by operation, the orientation of the work device 3 may be maintained in parallel to the inclined ground. An inclined ground lamp 26B located in the vicinity of the automatic horizon control switch 26 may be lit when the automatic horizon control switch 26 is set to the "inclined ground" state.

The automatic control of the Monroematic may be canceled when the automatic horizon control switch 26 is set to the "off state" by operation. The horizontal lamp 26A and the inclined ground lamp 26B may be turned off when the automatic horizon control switch 26 is set to the "off state".

The changeover switch 27 may be configured as a pressing operation type. The changeover switch 27 can set an attachment state of a link mechanism of the work device 3.

When the changeover switch 27 is set to a "1" state by operation, the width between lower links of the link mechanism may be widened and a link attachment hole may be suitable for the link mechanism closer to a rear. A 1 lamp 27A located in the vicinity of the changeover switch 27 may be lit when the changeover switch 27 is set to the "1" state.

On the other hand, when the changeover switch 27 is set to a "2" state by operation, the width between the lower links of the link mechanism may be widened and the link attachment hole may be suitable for the link mechanism closer to a front. A 2 lamp 27B located in the vicinity of the changeover switch 27 may be lit when the changeover switch 27 is set to the "2" state.

When the changeover switch 27 is set to a "3" state by operation, the width between the lower links of the link mechanism may be narrowed, and the link attachment hole may be suitable for the link mechanism closer to the front. A 3 lamp 27C located in the vicinity of the changeover switch 27 may be lit when the changeover switch 27 is set to the "3" state.

When the 3P changeover switch 25 is set to the "W3P" state, the changeover switch 27 may be automatically set to one of the "1" state, the "2" state, and the "3" state, and the corresponding lamp may be lit.

When the automatic horizon control switch 26 is in the "off state", the operation of the changeover switch 27 may become invalid, and the 1 lamp 27A, the 2 lamp 27B, and the 3 lamp 27C may be turned off.

The automatic horizon control angle adjusting dial 28 may be configured as a dial operation type. The orientation of the work device 3 can be adjusted by manually adjusting the dial operation position of the automatic horizon control angle adjusting dial 28 when the automatic horizon control switch 26 is in the "horizontal" state.

The automatic horizon control angle adjusting dial 28 can variably be adjusted to the dial operation position between a "lower left position" (which may also be referred to as a "left downward" position, as shown in Fig. 4, for example) and a "lower right position" (which may also be referred to as a "right downward" position, as shown in Fig. 4, for example). There may be a "horizontal position" between the "lower left position" and the "lower right position". When the dial operation position of the automatic horizon control angle adjusting dial 28 is set to the "horizontal position", the orientation of the work device 3 may be maintained in the horizontal state. On the other hand, as the dial operation position of the automatic horizon control angle adjusting dial 28 is brought closer to the "lower left position" from the "horizontal position", the work device 3 may be maintained in a more left downward orientation. As the dial operation position of the automatic horizon control angle adjusting dial 28 is brought closer to the "lower right position" from the "horizontal position", the work device 3 may be maintained in a more right downward orientation.

An automatic horizon control angle index 28A indicating the dial operation position of the automatic horizon control angle adjusting dial 28 may be provided in the vicinity of the automatic horizon control angle adjusting dial 28.

The height restriction dial 29 may be configured in a dial operation type. The height restriction dial 29 may be used to set a raising upper limit position where the link mechanism of the work device 3 can be raised.

The height restriction dial 29 can be variably adjusted to the dial operation position between a "3P manual position" and a "low position". Between the "3P manual position" and the "low position", a "high position" may be provided at a position close to the "3P manual position".

The raising upper limit position of the link mechanism of the work device 3 may be raised when the height restriction dial 29 is set to the "high position" by operation.

On the other hand, the raising upper limit position of the link mechanism of the work device 3 may be lowered when the height restriction dial 29 is set to the "low position" by operation.

When the height restriction dial 29 is set to the "3P manual position" by operation, the work device 3 can manually be raised and lowered by the automatic horizon control manually raising switch 30 and the automatic horizon control manually lowering switch 31 regardless of various controls.

A height restriction index 29A indicating the dial operation position of the height restriction dial 29 may be provided in the vicinity of the height restriction dial 29.

The automatic horizon control manually raising switch 30 may be configured as a pressing operation type. When pressing operation of the automatic horizon control manually raising switch 30 is performed while the height restriction dial 29 is set to the "3P manual position", the work device 3 may be raised while the pressing operation is performed.

The automatic horizon control manually lowering switch 31 may be configured as a pressing operation type. When the pressing operation of the automatic horizon control manually lowering switch 31 is performed while the height restriction dial 29 is set to the "3P manual position", the work device 3 may be lowered while the pressing operation is performed.

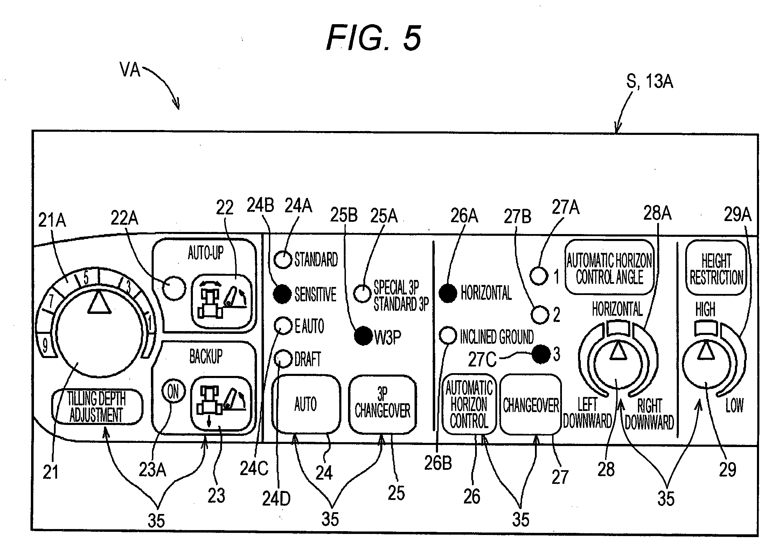

The traveling work parameter P including the setting state of each setting operation tool 11 by each item input to the slave-machine-side control device CECU may be output to the slave-machine-side communication unit 14B, and transmitted to the master-machine-side communication unit 14A through a wireless communication line. The traveling work parameter P may be output from the master-machine-side communication unit 14A to the acquisition unit 15 of a master-machine-side control device PECU. The traveling work parameter P of the slave machine VB, which may be input to the acquisition unit 15, may be reconstructed as an image by the display control unit 16, and the state of the slave-machine-side operation panel 12B of the slave machine VB may be virtually shown in the other-vehicle setting checking screen S of the display device 13 of the master machine VA as illustrated in Fig. 5.

When the setting state (e.g. the state indicated by the dial position or the lamp) of the setting operation tool 11 is changed by operating the setting operation tool 11 of the slave machine VB, the traveling work parameter P may be changed, and the changed setting state of the setting operation tool 11 of the slave machine VB can rapidly be shown in the other-vehicle setting checking screen S of the display device 13 of the master machine VA.

In addition to the other-vehicle setting checking screen S, the display device 13 of the master machine VA can switch the display to various screens.

As illustrated in Fig. 5, in the master machine VA, a picture 35 imitating the actual shape of the setting operation tool 11 in the slave-machine-side operation panel 12B may be shown in the other-vehicle setting checking screen S of the display device 13. In the master machine VA, the setting state by each setting operation tool 11 may be shown while an actual arrangement mode of the plurality of setting operation tools 11 on the slave-machine-side operation panel 12B of the slave machine VB is maintained in the other-vehicle setting checking screen S of the display device 13. In the master machine VA, only the portion corresponding to some of the plurality of items that can be set on the slave-machine-side operation panel 12B may be shown in the other-vehicle setting checking screen S of the display device 13.

Specifically, as illustrated in Fig. 4, the actual slave-machine-side operation panel 12B of the slave machine VB may have a non-planar shape. However, as illustrated in Fig. 5, the state of the slave-machine-side operation panel 12B reconstructed and shown in the other-vehicle setting checking screen S of the display device 13 of the master machine VA may be shown while deformed into a planar shape. As illustrated in Fig. 4, each actual setting operation tool 11 of the slave machine VB may include the setting operation tool 11 in a partially inclined orientation when viewed from one direction. However, as illustrated in Fig. 5, the state of each setting operation tool 11 shown in the other-vehicle setting checking screen S of the display device 13 of the master machine VA may be shown in the deformed state such that all the setting operation tools 11 are seen in a planar manner. Therefore, the states of the slave-machine-side operation panel 12B and each setting operation tool 11 of the slave machine VB in Fig. 4 can be checked more easily through the other-vehicle setting checking screen S of the display device 13 of the master machine VA in Fig. 5.

Although not illustrated, a master-machine-side operation panel 12A of the master machine VA may have the same specifications as the slave-machine-side operation panel 12B of the slave machine VB. Therefore, the operator who gets on the master machine VA can recognize at a glance the items corresponding to the setting operation tools 11 of the slave-machine-side operation panel 12B of the slave machine VB, which may be reconstructed on the other-vehicle setting checking screen S of the display device 13, while referring to the master-machine-side operation panel 12A of the master machine VA.

As described above, the setting state by each setting item by each setting operation tool 11 of the slave machine VB shown in the other-vehicle setting checking screen S of the display device 13 provided in the master machine VA can easily be checked in the master machine VA. Therefore, a burden on the operator is reduced, and the cooperative control of the two tractors can easily be monitored.

Further, in some circumstances, the operator of the master machine VA may change setting of the master machine VA using the setting operation tools comprised in the master-machine-side operation panel 12A, in accordance with the items corresponding to the setting operation tools 11 of the slave-machine-side operation panel 12B, reconstructed on the other-vehicle setting checking screen S of the display device 13. Alternatively or additionally, in some circumstances, the operator of the master machine VA may control the operation of the master machine VA and/or the slave machine VB using the master-machine-side terminal 6A, in accordance with the items corresponding to the setting operation tools 11 of the slave-machine-side operation panel 12B, reconstructed on the other-vehicle setting checking screen S of the display device 13. Thus, enabling checking of the setting state of the slave machine VB by the display device 13 provided in the master machine VA as described above may in some circumstances lead to appropriate cooperative control of the master machine VA and the slave machine VB for improving efficiency of the work to be performed in the field by the master machine VA and the slave machine VB.

### OTHER EXEMPLARY EMBODIMENTS

Other exemplary embodiments in which the above exemplary embodiment is modified will be described below. The following other exemplary embodiments can be applied in combination with the above embodiment as long as inconsistency is not generated. The scope of the present invention is not limited to the contents of each embodiment.
(1) In the above exemplary embodiment, the master machine VA and the slave machine VB have the same configuration by way of example. However, the present invention is not limited to the above exemplary embodiment. The master machine VA may be different from the slave machine VB in the configuration.
(2) In the above exemplary embodiment, the two tractors of the master machine VA and the slave machine VB are cooperatively controlled by way of example. However, the present invention is not limited to the above exemplary embodiment. For example, at least three tractors of the master machine VA and at least two slave machines VB may cooperatively be controlled. In this case, the other-vehicle setting checking screen S of the display device 13 provided in the master machine VA can be switched in each slave machine VB.
(3) In the above exemplary embodiment, by way of example, the picture imitating the actual shape of the setting operation tool 11 of the slave machine VB is shown in the other-vehicle setting checking screen of the display device 13 of the master machine VA. However, the present invention is not limited to the above exemplary embodiment. For example, a picture different from the actual shape showing the setting state of the setting operation tool 11 of the slave machine VB or estimation showing the setting state of the setting operation tool 11 may be shown in the other-vehicle setting checking screen of the display device 13 of the master machine VA.
(4) In the above exemplary embodiment, by way of example, in the other-vehicle setting checking screen S of the display device 13 of the master machine VA, the setting state of each setting operation tool 11 is shown while the actual arrangement mode of the plurality of setting operation tools 11 in the slave-machine-side operation panel 12B of the slave machine VB is maintained. However, the present invention is not limited to the above exemplary embodiment. For example, in the other-vehicle setting checking screen S of the display device 13 of the master machine VA, the setting state by each setting operation tool 11 may be shown while the actual arrangement mode of the plurality of setting operation tools 11 in the slave-machine-side operation panel 12B of the slave machine VB is rearranged.
(5) In the above exemplary embodiment, by way of example, only the portion corresponding to some of the plurality of items that can be set on the slave-machine-side operation panel 12B of the slave machine VB is shown in the other-vehicle setting checking screen of the display device 13 of the master machine VA. However, the present invention is not limited to the above exemplary embodiment. For example, all of the plurality of items that can be set on the slave-machine-side operation panel 12B of the slave machine VB may be shown in the other-vehicle setting checking screen of the display device 13 of the master machine VA.
(6) In the above exemplary embodiment, by way of example, the tractor is provided with the four-wheeled traveling device 1. However, the present invention is not limited to the above exemplary embodiment. For example, the four-wheeled traveling device 1 may be replaced with a crawler traveling device 1 or a semi-crawler traveling device 1.
(7) In the above exemplary embodiment, by way of example, the work terminal 6 is an on-vehicle type fixed to the driving section 2 of the tractor. However, the present invention is not limited to the above exemplary embodiment. For example, the work terminal 6 may be a portable type that can be taken out to the outside of the tractor. Alternatively, two types of the on-vehicle type and the portable type may be included as the work terminal 6, and these may be used together.
(8) In the above exemplary embodiment, by way of example, the work terminal 6 includes the acquisition unit 15 that acquires the traveling work parameter P and the display control unit 16 that causes the master-machine-side display device 13 of the master machine VA to display the information based on the traveling work parameter P. However, the present invention is not limited to the above exemplary embodiment. For example, a stationary management computer may be provided at a remote place far away from the tractor, and the management computer may have functions of the acquisition unit 15 and the display control unit 16. In this exemplary case, the management computer derives the information acquiring and displaying the traveling work parameter P of the slave machine VB by remote communication, transmits the information to the master machine VA by remote communication, and causes the display device to display the information.

### [Industrial Applicability]

In addition to the tractor, the present invention can be used for monitoring another work vehicle when the cooperative work is performed between a work vehicle such as agricultural vehicles including a combine and a rice transplanter and the like.

### [Reference Signs List]

11: setting operation tool
12B: slave-machine-side operation panel (operation panel)
13: display device
14A: master-machine-side communication unit (communication unit)
15: acquisition unit
16: display control unit
35: picture
C: communication system
P: traveling work parameter
S: other-vehicle setting checking screen
VA: master machine (work vehicle, first work vehicle)
VB: slave machine (another work vehicle, second work vehicle)

## Claims

1. A work vehicle (VA) comprising:
a display device (13) capable of displaying information;
a communication unit (14A) capable of communicating with another work vehicle (VB) capable of performing cooperative work;
an acquisition unit (15) to acquire, from the other work vehicle (VB) through the communication unit (14A), a traveling work parameter (P) manually set in each item by a plurality of setting operation tools (11) provided on an operation panel (12B) included in the other work vehicle (VB); and
a display control unit (16) to cause the display device (13) to display an other-vehicle setting checking screen (S) based on the traveling work parameter (P) acquired by the acquisition unit (15), the other-vehicle setting checking screen (S) virtually showing a state of the operation panel (12B) including a setting state by each of the setting operation tools (11) of the other work vehicle (VB).

2. The work vehicle (VA) according to claim 1, wherein a picture imitating an actual shape of each of the setting operation tools (11) is shown in the other-vehicle setting checking screen (S).

3. The work vehicle (VA) according to claim 1 or 2, wherein the setting state by each of the setting operation tools (11) is shown in the other-vehicle setting checking screen (S) while an actual arrangement mode of the plurality of setting operation tools (11) is maintained.

4. The work vehicle (VA) according to any one of claims 1 to 3, wherein only a portion corresponding to some of the plurality of items that can be set on the operation panel (12B) is shown in the other-vehicle setting checking screen (S).

5. An other-vehicle monitoring system comprising:
a first work vehicle (VA);
a second work vehicle (VB) capable of performing cooperative work with the first work vehicle (VA);
a communication system (C) to communicably connect the first work vehicle (VA) and the second work vehicle (VB);
a display device (13) provided in the first work vehicle (VA) to be capable of displaying information; and
an operation panel (12B) provided in the second work vehicle (VB), and including a plurality of setting operation tools (11) capable of manually setting a traveling work parameter (P) in each item,
wherein the first work vehicle (VA) is configured to acquire the traveling work parameter (P) from the second work vehicle (VB) through the communication system (C), and cause the display device (13) to display an other-vehicle setting checking screen (S) based on the traveling work parameter (P) acquired, the other-vehicle setting checking screen (S) virtually showing a state of the operation panel including a setting state by each of the setting operation tools (11) of the second work vehicle (VB).

6. A terminal device (6A) for being provided in a work vehicle (VA), the terminal device (6A) comprising:
a display device (13) capable of displaying information;
a communication unit (14A) capable of communicating with another work vehicle (VB) capable of performing cooperative work;
an acquisition unit (15) to acquire, from the other work vehicle (VB) through the communication unit (14A), a traveling work parameter (P) manually set in each item by a plurality of setting operation tools (11) provided on an operation panel (12B) included in the other work vehicle (VB); and
a display control unit (16) to cause the display device (13) to display an other-vehicle setting checking screen (S) based on the traveling work parameter (P) acquired by the acquisition unit (15), the other-vehicle setting checking screen (S) virtually showing a state of the operation panel (12B) including a setting state by each of the setting operation tools (11) of the other work vehicle (VB).

7. A method for monitoring a second work vehicle (VB) capable of performing cooperative work with a first work vehicle (VA), the method comprising:
acquiring, by an acquisition unit (15) through a communication unit (14A) that is comprised in the first work vehicle (VA) and that is configured to communicate with the second work vehicle (VB), a traveling work parameter (P) manually set in each item by a plurality of setting operation tools (11) provided on an operation panel (12B) included in the second work vehicle (VB);
causing, by a display control unit (16), a display device (13) comprised in the first work vehicle (VA) to display an other-vehicle setting checking screen (S) based on the traveling work parameter (P) acquired by the acquisition unit (15), the other-vehicle setting checking screen (S) virtually showing a state of the operation panel (12B) including a setting state by each of the setting operation tools (11) of the second work vehicle (VB).
